# EUROPÄISCHE PATENTSCHRIFT

(11) **EP 0 824 491 B1**
(45) Veröffentlichungstag und Bekanntmachung des Hinweises auf die Patenterteilung: **16.04.2003**
(21) Anmeldenummer: 96946116.9
(22) Anmeldetag: 21.12.1996
(51) Int. Cl.: B65G 47/53, B65G 47/64, B65G 21/12

(54) **FÖRDEREINRICHTUNG ZUM TRANSPORT VON WERKSTÜCKEN, INSBESONDERE VON WERKSTÜCKTRÄGERN**
CONVEYER FOR THE TRANSFER OF WORKPIECES, IN PARTICULAR WORKPIECE CARRIERS
CONVOYEUR POUR LE TRANSPORT DE PIECES, EN PARTICULIER DE SUPPORTS DE PIECES

(30) Priorität: 09.03.1996 DE 19609201
(43) Veröffentlichungstag der Anmeldung: 25.02.1998
(73) Patentinhaber: ROBERT BOSCH GMBH, 70442 Stuttgart (DE)
(72) Erfinder: LEISNER, Ernst, D-71254 Ditzingen (DE); CLAUSS, Heinz, D-70195 Stuttgart (DE); ULMER, Peter, D-73660 Urbach (DE); ROTHFUSS, Peter, D-71254 Ditzingen (DE)
(86) Internationale Anmeldenummer: DE9602506
(87) Internationale Veröffentlichungsnummer: WO97032802

(56) Entgegenhaltungen:
- EP-A- 0 519 339
- DE-A- 3 615 064
- FR-A- 2 306 145

## Beschreibung

### Stand der Technik

Die Erfindung geht aus von einer Fördereinrichtung zum Transport von Werkstücken, insbesondere Werkstückträgern, nach der Gattung des Anspruchs 1.

Eine derartige Fördereinrichtung zum Transport von Werkstückträgern geht aus der Offenlegungsschrift DE 36 15 064 A1 hervor. Diese Fördereinrichtung weist zwei parallele Transportbahnen und einen zwischen diesen angeordneten Querförderer auf, wobei die Transportbahnen je ein außenliegendes Förderband mit einem über Rollen geführtes endloses Gurtband und je ein innenliegendes mit Abstand zum Förderband angeordnetes Rollensystem aufweisen. Der Querförderer weist einen zwischen den parallelen Transportbahnen angeordneten Tragrahmen auf, der ein unbewegliches Mittelstück aufweist. An diesen schließt sich jeweils ein schwenkbar gelagertes Endstück an, das mit den Transportbahnen eine Übergabestelle bildet. Jedes dieser Endstücke kreuzt ein innenliegendes Rollensystem einer Transportbahn und überdeckt den Freiraum zwischen dem Rollensystem und einem außenliegenden Gurtband der Transportbahn. Den beiden Endstücken ist je eine Hubvorrichtung zugeordnet, mit der die Endstücke in mehrere unterschiedliche Vertikalpositionen bezüglich der Transportbahnen schwenkbar sind.

Bei der Ausgestaltung derartiger Querförderer ist erforderlich, daß die Schwenkachse, um die die Endstücke verschwenkbar anordenbar sind, einen bestimmten Abstand zum innenliegenden Rollensystem aufweist, damit ein Überfahren des zwischen den Endstücken des Querförderers angeordneten Rollensystems ermöglicht ist. Darüber hinaus ist eine teileintensive Ausgestaltung im Schwenkbereich erforderlich, damit das Gurtband der Endstücke angetrieben werden kann. Durch die Unterteilung des Querförderers in Endabschnitte und in ein Mittelstück sind eine Vielzahl von unterschiedlichen Riemenlängen erforderlich.

Desweiteren ist bereits eine Fördereinrichtung zum Transport von Werkstückträgern bekannt geworden, die zwei parallele Transportbahnen und einen zwischen diesen angeordneten Querförderer aufweist. Diese Fördereinrichtung ist als Eingurtbandsystem ausgebildet. Der Querförderer, der eine Ein- und/oder Ausschleusstrecke bildet, weist einen starren Rahmen auf, der durch jeweils einen im Endbereich angeordneten Hubzylinder auf- und abbewegbar ist.

Bei derartigen Eingurtbandsystemen ist erforderlich, daß das Werkstück auf dem Werkstückträger derart angeordnet ist, daß eine gleichmäßige Kraftverteilung sowohl auf die Gurtförderstrecke als auch auf das innenliegende Rollensystem wirkt. Sobald die Lastverteilung des Werkstücks auf den Werkstückträger vermehrt über dem Rollensystem liegt, kann ein störungsfreier Betrieb beim Einschleusen und Ausschleusen des Werkstückträgers nicht sichergestellt sein, da die zwischen dem Werkstückträger und dem Eingurtband wirkende Reibkraft sich verringern kann. Dadurch unterliegt der Transportriemen einem erhöhten Verschleiß durch die Reibung.

### Vorteile der Erfindung

Die erfindungsgemäße Fördereinrichtung besitzt den Vorteil, daß die einteilig ausgebildete Förderstrecke eine Vereinfachung der Montage und eine Verkürzung der Montagezeiten ermöglicht. Desweiteren ist durch diese Ausgestaltung ein modularer Aufbau gegeben. Die einteilig ausgebildete Förderstrecke ist als Doppelgurtförderer vorgesehen ist, wodurch eine Reduzierung der mechanischen Bauteile ermöglicht. Gleichzeitig kann ein sicheres Ein- und Ausschleusen bzw. eine sichere Übergabe der Werkstückträger gegeben sein. Durch die Ausbildung der Förderstrecke als Doppelgurtförderer in einer Übergabestelle, aus dem der Werkstückträger quer zur Förderrichtung herausgefördert werden soll, ist ermöglicht, daß selbst bei ungleicher Lastverteilung des Werkstücks auf dem Werkstückträger ein sicherer Abtransport gegeben ist. An einem gegenüberliegenden Ende des zuvor beschriebenen Endbereichs ist eine innenliegende Förderstrecke um die Länge der Übergabestelle verkürzt ausgebildet. In dem Freiraum zwischen einer quer dazu angeordneten Förderstrecke, die als Doppelgurtförderer ausgebildet ist, ist ein passives Rollensystem vorgesehen, das ebenfalls mit einer außenliegenden Gurtförderstrecke aufund abbewegbar ist. Aufgrund dessen, daß der Werkstückträger bereits von dem Doppelgurtförderer von der Übergabestelle in Bewegung ist, kann selbst bei ungleicher Lastverteilung ein sicheres Einschleusen des Werkstückträgers in einer quer zur Förderstrecke angeordneten weiteren Förderstrecke erfolgen, da im Vergleich zum Stand der Technik bei dem Eingurtbandsystem der Werkstückträger nicht aus einer Ruheposition aus der Übergabestelle herausgefördert werden muß.

Zum Umsetzen der Werkstückträger von einer Ein- und/oder Ausschleusstrecke in eine Hauptförderstrecke und/oder Nebenförderstrecke sind die Endbereiche der Ein- und Ausschleusstrecken auf- und abbewegbar in den Übergabestellen gelagert. Durch die starre Ausbildung der gesamten Förderstrecke über die Länge der Ein- und/oder Ausschleusstrecke kann eine bauteilereduzierte und kostengünstige Ausgestaltung gegeben sein. Desweiteren kann durch die Anordnung eines passiven Rollensystems in einem Endbereich der Förderstrecken eine erhebliche Vereinfachung der Montage gegeben sein.

Durch die in den Unteransprüchen aufgeführten Maßnahmen sind vorteilhafte Weiterbildungen und Verbesserungen der im Hauptanspruch angegebenen Fördereinrichtung gegeben.

Durch die unabhängig voneinander auf- und abbewegbaren Endbereiche der Ein- und Ausschleusstrecken kann in einem Endbereich ein Ein- und/oder Ausschleusvorgang stattfinden, ohne daß der gegenüberliegende Endbereich bei einem Einund/oder Ausschleusvorgang beeinflußt wird. Gleichzeitig kann der und/oder die Endbereiche der Ein- und Ausschleusstrecke auch eine Position einnehmen, in der der Werkstückträger die Übergabestelle überfährt, wobei diese Position ebenfalls keine Auswirkung auf einen gegenüberliegenden Endbereich hat.

Die Auf- und Abbewegung der Endbereiche der Ein- und/oder Ausschleusstrecke erfolgt durch ein jeweils in dem Endbereich angeordnetes Hubelement, wobei vorteilhafteweise zwischen einem Tragrahmen der Ein- und/oder Ausschleusstrecke und dem Hubelement ein Dämpfungselement angeordnet ist. Dadurch kann eine gedämpfte und geräuscharme Übergabe der Werkstückträger von einer Förderrichtung in eine quer dazu verlaufende weitere Förderrichtung erfolgen. Die beim Einfahren in die Übergabestelle und beim Anliegen des Werkstückträgers an einen Anschlag, der in Förderrichtung sperrt, auftretenden Kippmomente, die auf eine quer zur Förderrichtung angeordnete Förderstrecke wirken, können abgefangen und aufgenommen werden. Desweiteren weist eine derartige gedämpfte Lagerung des Tragrahmens den Vorteil auf, daß ein Ausgleich bei der Kippbewegung des Tragrahmens erfolgen kann, da die Hubelemente in den jeweiligen Endbereichen unabhängig voneinander in einer unteren, mittleren oder oberen Vertikalposition angeordnet sein können.

Bei den Ein- und Ausschleusstrecken ist vorteilhafterweise vorgesehen, daß der Endbereich, der der passiven Förderstrecke gegenüberliegend angeordnet ist, gleich lang ausgebildete Enden der Förderstrecken aufweist. Dadurch können beide Gurtförderstrecken vollständig in die Übergabestelle hineinragen, wodurch ein sicheres Ausschleusen des Werkstückträgers gegeben ist. Gleichzeitig kann durch diese Ausgestaltung ein modularer Aufbau erzielt werden.

Die Haupt- und Nebenförderstrecken weisen vorteilhafterweise einen dem der passiven Förderstrecke gegenüberliegenden Endbereich auf, bei dem die innenliegende Förderstrecke zumindest um den Betrag der quer in die Übergabestelle einlaufenden äußeren Förderstrecke der Ein- und/oder Ausschleusförderstrecke verkürzt ist. Dadurch kann die modulare Ausbildung von einem Transportfördersystem desweiteren gesteigert werden. Gleichzeitig kann wiederum ein sicheres Ausschleusen in eine Förderrichtung erfolgen, die quer zur vorherigen Förderrichtung des Werkstückträgers vorgesehen ist.

### Zeichnung

Ein Ausführungsbeispiel der Erfindung ist in der Zeichnung dargestellt und in der nachfolgenden Beschreibung näher erläutert. Es zeigen:
- Fig. 1: eine schematische Draufsicht auf eine ausschnittsweise dargestellte Fördereinrichtung,
- Fig. 2: eine schematische Schnittdarstellung einer Hubeinrichtung mit einer auf- und abbewegbaren Querförderstrecke,
- Fig. 3: eine Arbeitsstellung der Querförderstrecke,
- Fig. 4: eine alternative Arbeitsstellung der Querförderstrecke und
- Fig. 5: eine weitere mögliche Arbeitsstellung der Querförderstrecke.

### Beschreibung des Ausführungsbeispiels

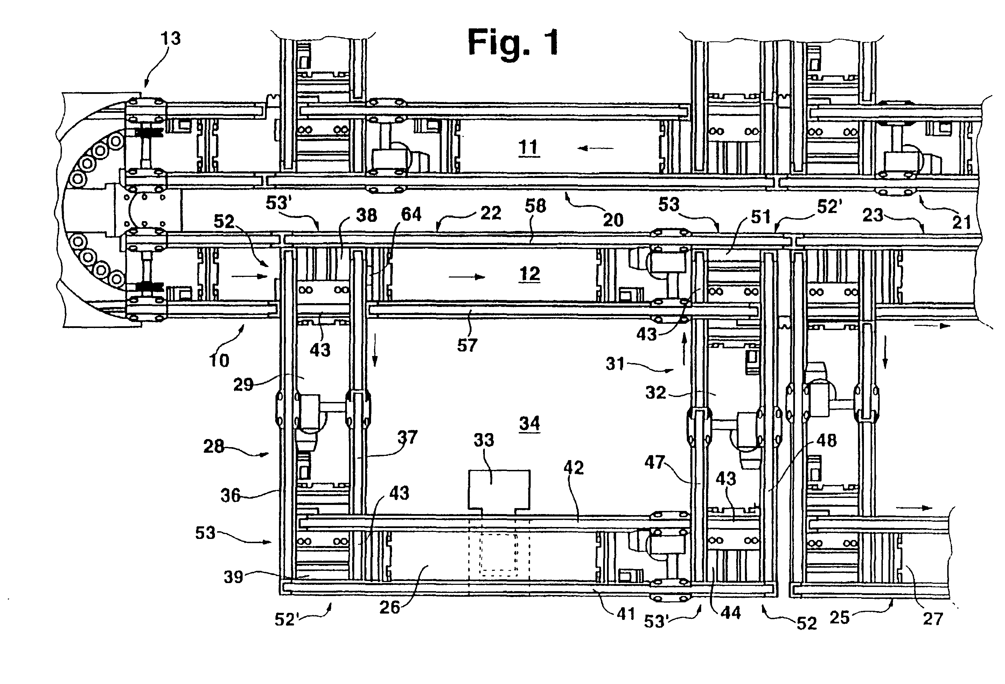

In Fig. 1 ist eine Teilstrecke einer Hauptumlaufbahn 10 einer Fördereinrichtung mit einer Hintransportstrecke 11 und einer Rücktransportstrecke 12, die parallel zueinander angeordnet sind, dargestellt. An den beiden Enden der Hin- und Rücktransportstrecke 11, 12 ist jeweils ein Umlenkmodul 13 angeordnet. Die Hauptumlaufbahn 10 ist aus mehreren hintereinander angeordneten Hauptförderstrecken 20 bis 23 dargestellt, wobei die Hauptförderstrecken 20, 21 und wahlweise noch weitere Hauptförderstrecken die Hintransportstrecke 11 und die Hauptförderstrecken 22, 23 und wahlweise noch weitere Hauptförderstrecken die Rücktransportstrecke 12 bilden.

Im vorliegenden Ausführungsbeispiel ist die Fördereinrichtung mit den beiden Förderstrecken 11, 12 als Doppelgurtförderer ausgebildet, wobei jede Förderstrecke 20 bis 23 beispielsweise über einen eigenen Antrieb für die Transportbänder des Doppelgurtförderers verfügt.

Entlang der Rücktransportstrecke 12 ist ein erster und ein zweiter Nebenbahnabschnitt 26, 27 angeordnet. Die Nebenbahnabschnitte 26, 27 werden jeweils von einem Ausschleusmodul 28 mit einer Ausschleusstrecke 29 und einem Einschleusmodul 31 mit einer Einschleusstrecke 32 gebildet. Das Ausschleusmodul 28 und das Einschleusmodul 31 sind beispielsweise rechtwinklig zwischen zwei Hauptförderstrecken 22, 23 angeordnet. In dem Nebenabschnitt 26 ist eine Bearbeitungsstation 33 vorgesehen, an der auf einem Werkstückträger 35 angeordnete Teile bearbeitet werden.

Die Hauptförderstrecke 22 und eine parallel dazu angeordnete Nebenförderstrecke 26 sowie die Ausschleusstrecke 29 und die Einschleusstrecke 32 bilden ein Modul 34, das beispielhaft näher erläutert wird. Derartige Module 34 können mehrfach hintereinander angeordnet sein, wodurch die hintereinander angeordneten Hauptförderstrecken 20 bis 23 eine Hintransportstrecke 11 und eine Rücktransportstrecke 12 einer Fördereinrichtung bilden. In Abhängigkeit der Anzahl der Bearbeitungsstation 33 kann die Anzahl der Module 34 ausgewählt werden.

Die Ausschleusstrecke 29 weist ein außenliegendes Förderband 36 und ein innenliegendes Förderband 37 auf, die beide als Gurtförderer ausgebildet sind. Im Kreuzungsbereich der Hauptförderstrecke 12 mit einem Endbereich 52 der Ausschleusstrecke 29 ist eine Übergabestelle 38 gebildet, in der die beiden Enden der außenliegenden und innenliegenden Förderbahnen 36, 37 gleich lang ausgebildet sind. Gegenüberliegend ist eine Übergabestelle 39 zwischen einem Endbereich 53 der Ausschleusstrecke 29 und einem Endbereich 52' der Nebenförderstrecke 26 gebildet. Dabei greifen die Förderbahnen 36, 37 der Ausschleusstrecke 29 verzahnungsartig mit einer außenliegenden Förderbahn 41 und einer innenliegenden Förderbahn 42 der Nebenförderstrecke 26 ineinander. Die angetriebene bzw. aktive innenliegende Förderbahn 37 ist gegenüber der außenliegenden aktiven Förderbahn 36 der Ausschleusstrecke 29 verkürzt ausgebildet und endet stirnseitig zur innenliegenden Förderbahn 42 der Nebenförderstrecke 26. In der Übergabestelle 39 zwischen der außenliegenden Förderbahn 41 und der innenliegenden Förderbahn 42 wird die innenliegende Förderbahn 37 durch einen passiven Förderbahnabschnitt 43 ergänzt, so daß die innenliegende Förderbahn 37 und der passive Förderbahnabschnitt 43 eine gleich lange Förderbahn wie die außenliegende Förderbahn 36 aufweisen.

Der passive Förderbahnabschnitt 43 ist als Rollenstrecke ausgebildet. Dieser passive Förderbahnabschnitt 43 ist mit einem Abstand zur aktiven innenliegenden Förderbahn 37 angeordnet, der im wesentlichen der Breite der innenliegenden Förderbahn 42 der Nebenförderstrecke 26 entspricht. In diesem durch den Abstand gebildeten Freiraum verläuft die innenliegende Förderbahn 42 der Nebenförderstrecke 26 und endet stirnseitig zur außenliegenden Förderbahn 36 der Ausschleusstrecke 29. Die außenliegende Förderbahn 36 der Ausschleusstrecke 29 grenzt stirnseitig an die außenliegende Förderbahn 41 der Nebenförderstrecke 26 an. Durch diese Anordnung und Ausgestaltung des Endbereichs 53 der Ausschleusstrecke 29 und des Endbereichs 52' der Nebenfürderstrecke 26 ist die Übergabestelle 39 gebildet. Dabei greifen die Endbereiche 53, 52' verzahnungsartig ineinander. Die Übergabestelle 39 und 51 sind gleich ausgebildet.

Eine derartig ausgebildete Ausschleusstrecke 39 weist den Vorteil auf, daß beim Abtransport eines Werkstückträgers 35 aus der Übergabestelle 38 in Richtung auf die Übergabestelle 39 zwei angetriebene bzw. aktive Förderbahnen 36, 37 vorgesehen sind, so daß ein sicheres Herausführen des Werkstückträgers 35 aus der Übergabestelle 38 gegeben ist.

Beim Einfahren des Werkstückträgers 35 in die Übergabestelle 39 erfolgt der Transport über die aktive außenliegende Förderbahn 36, wobei parallel dazu'der passive Förderbahnabschnitt 34 den Endbereich ergänzt. Aufgrund des bereits in Transportrichtung bewegten Werkstückträgers 35 kann eine aktive Förderbahn 36 in der Übergabestelle 39 genügen, um sicherzustellen, daß der Werkstückträger 35 in die Übergabestelle 39 vollständig eingefahren werden kann.

Der Endbereich 52' der Nebenförderstrecke 26 weist in der Übergabestelle 39 eine unterschiedlich lang ausgebildete außenliegende und innenliegende Förderbahn 41, 42 auf. Der Übergabestelle 39 in Förderrichtung gesehen gegenüberliegend ist eine weitere Übergabestelle 44 vorgesehen, in der der Werkstückträger 35 von der Nebenförderstrecke 26 auf die Einschleusstrecke 32 umgesetzt wird. Die Nebenförderstrecke 26 weist einen Endbereich 53' der außenliegenden und innenliegenden Förderbahn 41, 42 auf, der dem Endbereich 53 der Ausschleusstrecke 29 entspricht und einen Teil der Übergabestelle 39 bildet. Die außenliegende Förderbahn 41 erstreckt sich über die gesamte Nebenförderstrecke 26. Die innenliegende Förderbahn 42 ist verkürzt ausgebildet und grenzt an eine quer zur innenliegenden Förderbahn 42 verlaufende innenliegende Förderbahn 47 der Einschleusstrecke 32. Zwischen der innenliegenden Förderbahn 47 und einer außenliegenden Förderbahn 48 der Einschleusstrecke 32 ist in Verlängerung der innenliegenden Förderbahn 42 ein passiver Förderbahnabschnitt 43 vorgesehen.

Eine derartige Ausgestaltung eines Kreuzungsbereiches ist ebenso in einer Übergabestelle 51 der Einschleusstrecke 31 in die Hauptförderstrecke 22 mit einer innenliegenden Förderbahn 57 und einer außenliegenden Förderbahn 58 vorgesehen.

Durch die erfindungsgemäß ausgebildeten Endbereiche der Einund Ausschleusstrecken 29, 32 und der Endbereiche der Hauptförderstrecke 22 und Nebenförderstrecke 26 kann ein sicheres Herausfahren und Einführen in die Übergabestellen 38, 39, 44, 51 gegeben sein.

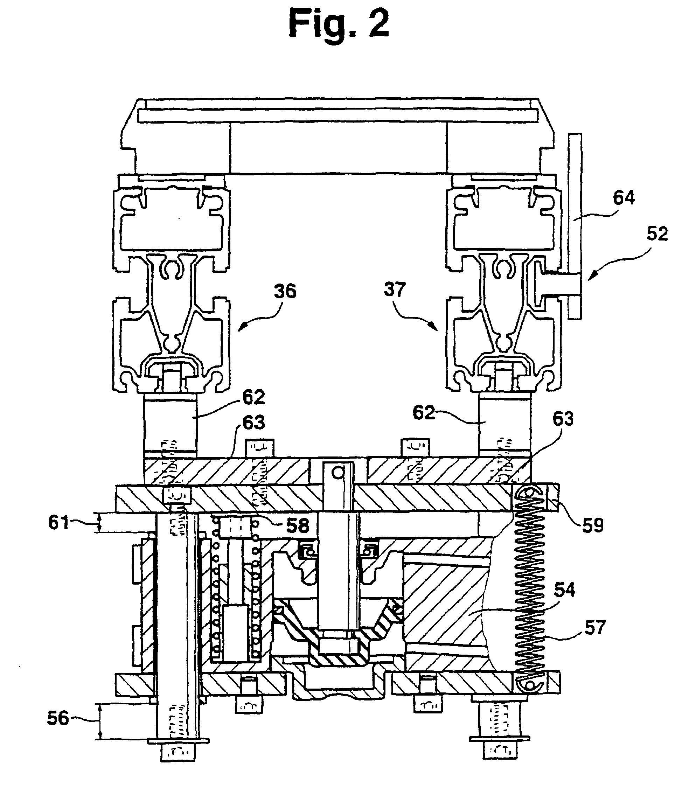

Zum Ein- und Ausschleusen der Werkstückträger 35 durch die Ein- und Ausschleusmodule 28, 31 sind diese in den Übergabestellen 38, 39, 44, 51 auf- und abbewegbar angeordnet. Die Auf- und Abbewegung des Endbereichs 52 in der Übergabestelle 38, 44 und des Endbereichs 53 in der Übergabestelle 39, 51 der Ausschleusstrecke 29 und der Einschleusstrecke 31 erfolgt jeweils über eine Hubeinheit 54, die den Endbereichen 52, 53 zugeordnet ist und in Fig. 2 in einer Schnittdarstellung dargestellt ist. Die Hubeinheit 54 entspricht einem an sich bekannten Blockzylinder. Dabei handelt es sich um einen doppelt beaufschlagbaren Hubzylinder, der den Endbereich 52, 53 in unterschiedliche Vertikalposition überführen kann. Alternativ können auch hydraulisch, elektromagnetisch oder elektrisch angetriebene Hubeinheiten vorgesehen sein.

In Fig. 2 ist eine Mittelstellung der Hubeinheit 54 dargestellt, in der beispielsweise ein in die Übergabestelle 38 einlaufender Werkstückträger 35 durch einen Anschlag 64 angehalten werden kann. Zum Ausheben des Werkstückträgers 35 aus der Hauptförderstrecke 22 wird die Hubeinheit 54 mit Druckluft beaufschlagt, so daß der Endbereich 52 um einen Hubweg 56 in eine obere Vertikalposition bewegt wird. Nachdem der Werkstückträger 35 aus der Übergabestelle 38 herausgefördert ist, kann die Hubeinheit 54 in eine Mittelposition übergeführt werden, wie sie in Fig. 2 dargestellt ist. Dabei kann die Hubeinheit 54 drucklos sein, wobei eine Rückstellfeder 57 und eine Druckfeder 58 ins Gleichgewicht kommen können und eine Grundplatte 59, auf der der Endbereich 52 der Ausschleusstrecke 29 gelagert ist, in eine Mittelstellung überführen.

Sofern die Übergabestelle 38 von einem Werkstückträger 35 überfahren werden soll, wird eine zweite Kammer der Hubeinheit 54 beaufschlagt, so daß eine Bewegung der Grundplatte 49 mit einem Hub 61 in eine untere Position erfolgt. Dadurch taucht der Endbereich 52 der Ausschleusstrecke 29 mit dem Anschlag 64 bnach unten ab, so daß die Übergabestelle 38 überfahren werden kann. Nachdem dies erfolgt ist, kann die Hubeinheit 54 drucklos geschalten werden, wodurch diese wiederum in eine Mittelstellung überführbar ist.

Die außenliegende und innenliegende Förderbahn 36, 37 ist jeweils über ein Dämpfungselement 62 zu der Grundplatte 59 bzw. einer zu der Grundplatte 59 angeordneten Zwischenplatte oder Adapterplatte 63 angeordnet. Diese Dämpfungselemente 62 sind elastisch ausgebilde, so daß eine gedämpfte Lagerung der Ausschleusstrecke 29 und Einschleusstrecke 32 vorgesehen ist. Diese Dämpfungselemente 62 können aus einem elastischen Kunststoff oder als Luftpolster oder sonstige Dämpfungselemente ausgebildet sein, die sowohl eine dämpfende Wirkung in Förderrichtung als auch quer zur Förderrichtung aufweisen.

Sobald ein Ausschleusen des Werkstückträgers 35 aus der Hauptförderstrecke 22 in die Ausschleusstrecke 29 erfolgen soll, wird der Endbereich 52 in der Übergabestelle 38 in eine mittlere Position übergeführt, so daß ein an der innenliegenden Förderbahn 37 angeordneter Anschlag 64 in Förderrichtung sperrt. Der Werkstückträger 35 kommt an dem Anschlag 64 zum Anliegen. Bei dieser ruckartigen Stoppbewegung erfährt der Endbereich 52 der Ausschleusstrecke 29 eine Querkraft, die durch die Dämpfungselemente aufgenommen und kompensiert werden kann.

Desweiteren ist durch eine derartige elastische Kompensation gewährleistet, daß die Endbereiche 52, 53 der Ausschleusstrecke 29 in unterschiedlichen Vertikalpositionen unabhängig voneinander positionierbar sind, da die Dämpfungselemente 62 auch in Förderrichtung elastisch und nachgiebig ausgebildet sind.

In dem Endbereich 53 der Ausschleusstrecke 29 wird analog anstelle des angetriebenen Förderbahnabschnitts 37 in dem Endbereich 52 der passive Förderbahnabschnitt 43 in unterschiedliche Vertikalpositionen übergeführt.

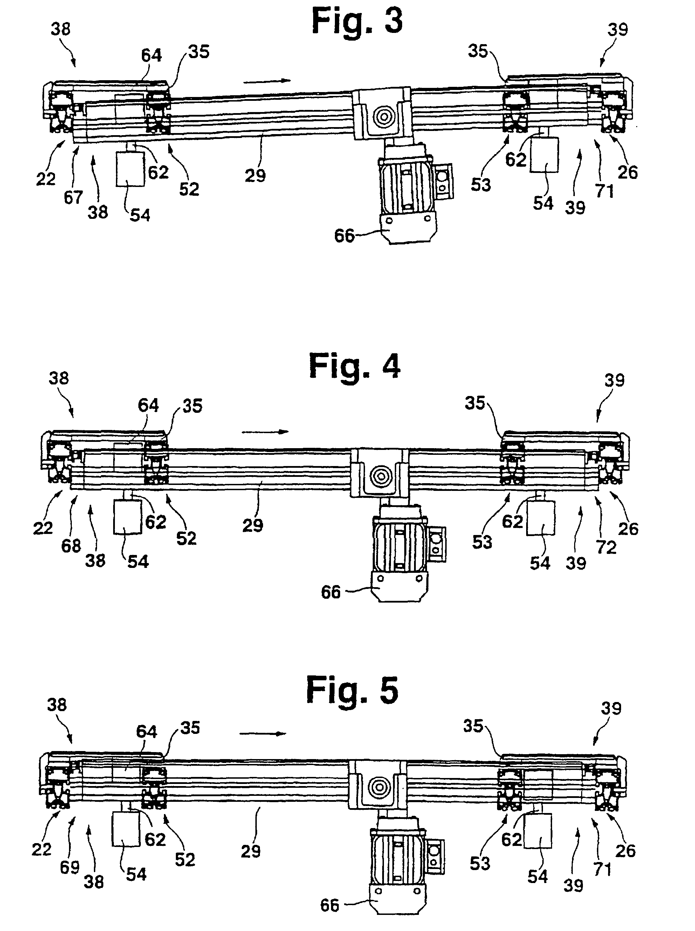

In den Fig. 3, 4 und 5 sind unterschiedliche Vertikalpositionen des Endbereiches 52 und 53 der Ausschleusstrecke 29 dargestellt. Dies gilt ebenso für die Einschleusstrecke 32. Diese Figuren 3 bis 5 stellen nur eine Auswahl der möglichen Anordnungen dar, wobei beispielhaft eine untere, mittlere und obere Vertikalposition der Ausschleusstrecke 29 in der Übergabestelle 38 dargestellt ist, um den Werkstückträger 35 auf der Hauptförderstrecke 22 passieren zu lassen, anzuhalten oder auszuheben, um anschließend quer zur Hauptförderrichtung abtransportiert zu werden. Die Vertikalpositionen des Endbereiches 53 in der Übergabestelle 39 sind wahlweise herausgegriffen.

In Fig. 3 ist eine Seitenansicht auf die Ausschleusstrecke 29 dargestellt. Die Ausschleusstrecke 29 weist einen Antrieb 66 auf, der die außenliegende und innenliegende Förderbahn 36, 37 antreibt. In dem Endbereich 52 ist die Ausschleusstrecke 29 über das Dämpfungselement 62 zur Hubeinheit 54 gelagert. Der Endbereich 52 ist in einer unteren Vertikalposition 67 angeordnet. In dieser Vertikalposition senkt sich der Endbereich 52 so weit nach unten ab, daß ein über die Förderebene der innenliegenden und außenliegenden Förderbahn 36, 37 ragender Anschlag 64 unterhalb der Förderebene der Haupttransportstrecke 22 positioniert wird. In dieser unteren Vertikalposition 67 kann der Werkstückträger 35 die Übergabestelle 38 überfahren und in Förderrichtung weitergefördert werden.

Der Endbereich 53 kann, wie beispielhaft dargestellt, in einer oberen Vertikalposition 71 anordenbar sein. In dieser Position kann ein ausgeschleuster Werkstückträger 35 in die Übergabestelle 39 einfahren.

In Fig. 4 ist der Endbereich 52 in eine mittlere Vertikalposition 68 übergeführt worden. Ein derartiges Signal erfolgt von einer Steuerung dann, wenn ein Werkstückträger 35 über die Ausschleusstrecke 29 zu der Bearbeitungsstation 33 in dem Nebenförderabschnitt 26 übergeführt werden soll. In der mittleren Vertikalposition 68 ragt der Anschlag 64 über die Förderebene der Hauptförderstrecke 22, wodurch der Werkstückträger 35 in der Übergabestelle 38 angehalten wird.

Der Endbereich 53 ist gegenüber der oberen Vertikalposition 71 gemäß Fig. 3 in eine mittlere Vertikalposition 72 übergeführt, wodurch der Werkstückträger 35 auf der Nebenförderstrecke 26 aufgesetzt wird.

In Fig. 5 ist über einen nicht dargestellten Signalgeber erkannt worden, daß ein Werkstückträger 35 in die übergabestelle 38 eingefahren und positioniert ist, wodurch die Steuerung ein Signal abgibt, damit der Endbereich 52 der Ausschleusstrecke 29 in eine obere Vertikalposition 69 übergeführt wird, um den Werkstückträger 35 aus der Übergabestelle 38 herauszuheben und in Förderrichtung der Ausschleusstrecke 29 abzutransportieren.

Nachdem der Werkstückträger 35 aus der Übergabestelle 38 herausgefördert ist und die Übergabestelle 39 über einen Signalgeber das Signal erhalten hat, daß darin kein Werkstückträger 35 positioniert ist, wird der Endbereich 53 in eine obere Vertikalposition 71 übergeführt, damit der aus der Hauptstrecke 22 ausgehobene Werkstückträger 35 in die Übergabestelle 39 einfahren kann. Sobald ein Signalgeber der Übergabestelle 39 erkannt hat, daß der Werkstückträger 35 vollständig in der Übergabestelle 39 positioniert ist, wird der Endbereich 53 in eine untere Vertikalposition übergeführt, so daß dieser auf der Nebenförderstrecke 26 abgesetzt und anschließend abtransportiert werden kann.

Dieser Ein- und Ausschleusvorgang, wie er in den Figuren 3 bis 5 für die Ausschleusstrecke 29 beschrieben ist, gilt analog für die Einschleusstrecke 31. Die Hauptförderstrecke 22 und Nebenförderstrecke 26 bleiben dabei in einer Ruheposition.

Die Überwachung der Übergabestellen 38, 39, 44, 51 wird durch Signalgeber ermöglicht. Ebenso können Vereinzelungselemente vor jeder Übergabestelle 38, 39, 44, 51 vorgesehen sein, die mit den die Übergabestellen 38, 39, 44, 51 überwachenden Signalgebern gekoppelt sind, so daß ein störungsfreier Betrieb gewährleistet sein kann.

## Patentansprüche

1. Fördereinrichtung zum Transport von Werkstücken, insbesonder von Werkstückträgern (35) mit einer Hauptförderstrecke (20, 21, 22, 23) und mit einer parallel dazu angeordneten Nebenförderstrecke (26, 27) sowie mit mindestens einer zwischen den Förderbahnen (20 bis 23, 26, 27) angeordneten Querförderstrecke (29, 32), die in einem Kreuzungsbereich eine Übergabestelle (38, 39, 44, 51) bilden, wobei die Übergabe der Werkstückträger (35) von der quer zur Hauptförderstrecke (20 bis 23) und der Nebenförderstrecke (26, 27) angeordneten Querförderstrecke (29, 32) durch schwenkbar auf- und abbewegbare Endbereiche (52, 53) der Querförderstrecke (29, 32) erfolgt, **dadurch gekennzeichnet, daß** die Förderstrecken (20 bis 23, 26, 27, 29, 32) als Doppelgurtförderer mit einer innenliegenden Förderbahn (37, 42, 47, 57) und einer außenliegenden Förderbahn (36, 42, 48, 58) ausgebildet sind, daß die innenliegende Förderbahn (37, 47) des Querförderers (29, 32) um die Breite der Übergabestelle (38, 39, 44, 51) verkürzt ausgebildet ist, an die sich mit Abstand im Endbereich (53) ein in der Übergabestelle (38, 39, 44, 51) anordenbarer passiver Förderbahnabschnitt (43) anschließt, und daß die Querförderstrecke (29, 32) über die gesamte Förderlänge starr ausgebildet ist und die Endbereiche (52, 53) der Querförderstrecke (29, 32) in den Übergabestellen (38, 39, 44, 51) auf- und abbewegbar gelagert sind.

2. Fördereinrichtung nach Anspruch 1, **dadurch gekennzeichnet, daß** die Endbereiche (52, 53) der Querförderstrecke (29, 32) unabhängig voneinander aufund abbewegbar sind.

3. Fördereinrichtung nach Anspruch 1 oder 2, **dadurch gekennzeichnet, daß** die Querförderstrecken (29, 32) jeweils zumindest eine den Endbereichen (52, 53) angeordnete Hubeinheit (54) aufweisen.

4. Fördereinrichtung nach einem der vorhergehenden Ansprüche, **dadurch gekennzeichnet, daß** die Endbereiche (52, 53) der Querförderstrecken (29, 32) mit Dämpfungselementen (62) zur Hubeinheit (54) gelagert sind.

5. Fördereinrichtung nach Anspruch 4, **dadurch gekennzeichnet, daß** die Dämpfungselemente (62) in Abhängigkeit der aus der Hubbewegung resultierenden Kippbewegung der Querförderstrecken (29, 32) auslenkbar sind.

6. Fördereinrichtung nach Anspruch 4 oder 5, **dadurch gekennzeichnet, daß** die zur Querförderstrecke (29, 32) angeordneten Dämpfungselemente (62) quer zur Förderrichtung wirkende Kräfte kompensieren.

7. Fördereinrichtung nach einem der Ansprüche 4 bis 6, **dadurch gekennzeichnet, daß** die Dämpfungselemente (62) zwischen den Förderbahnen (47, 48) und einer Hubeinheit (54) anordenbar sind.

8. Fördereinrichtung nach einem der vorhergehenden Ansprüche, **dadurch gekennzeichnet, daß** die Querförderstrecken (29, 32) einen den passiven Förderbahnabschnitt (43) enthaltenen Endbereich (53) und einen gegenüberliegenden Endbereich (52) aufweisen, dessen Enden der Förderbahnen (36, 37, 47, 48) gleich lang ausgebildet sind.

9. Fördereinrichtung nach einem der Ansprüche 1 bis 6, **dadurch gekennzeichnet, daß** die Haupt- und Nebenförderstrecken (20 bis 23, 26, 27) einen den passiven Förderbahnabschnitt (43) enthaltenden Endbereich (52') und einen gegenüberliegenden Endbereich (53') aufweist, dessen innenliegende Förderstrecke (42) zumindest um den Betrag der quer in die Übergabestelle (39, 51) einlaufenden äußeren Förderbahn (36) der Querförderstrecke (29, 32) verkürzt ist.

## Claims

1. Conveying apparatus for transporting workpieces, in particular workpiece carriers (35), having a main conveying section (20, 21, 22, 23) and having a secondary conveying section (26, 27), which is arranged parallel to the main conveying section, and having at least one transverse conveying section (29, 32), which is arranged between the conveying paths (20 to 23, 26, 27), these forming a transfer location (38, 39, 44, 51) at a crossover region, the transfer of the workpiece carriers (35) from the transverse conveying section (29, 32), which is arranged transversely to the main conveying section (20 to 23) and the secondary conveying section (26, 27), taking place by way of end regions (52, 53) of the transverse conveying section (29, 32) which can be moved up and down in a pivotable manner, **characterized in that** the conveying sections (20 to 23, 26, 27, 29, 32) are designed as double-belt conveyors with an inner conveying path (37, 42, 47, 57) and an outer conveying path (36, 42, 48, 58), **in that** the inner conveying path (37, 47) of the transverse conveyor (29, 32) is designed to be shorter by the width of the transfer location (38, 39, 44, 51), which is adjoined at a distance in the end region (53) by a passive conveying-path portion (43) which can be arranged in the transfer location (38, 39, 44, 51), and **in that** the transverse conveying section (29, 32) is of rigid design over the entire conveying length and the end regions (52, 53) of the transverse conveying section (29, 32) are mounted such that they can be moved up and down in the transfer locations (38, 39, 44, 51).

2. Conveying apparatus according to Claim 1, **characterized in that** the end regions (52, 53) of the transverse conveying section (29, 32) can be moved up and down independently of one another.

3. Conveying apparatus according to Claim 1 or 2, **characterized in that** the transverse conveying sections (29, 32) have in each case at least one lifting unit (54) assigned to the end regions (52, 53).

4. Conveying apparatus according to one of the preceding claims, **characterized in that** the end regions (52, 53) of the transverse conveying sections (29, 32) are mounted by way of damping elements (62) in relation to the lifting unit (54).

5. Conveying apparatus according to Claim 4, **characterized in that** the damping elements (62) can be deflected in dependence on the tilting movement of the transverse conveying sections (29, 32) which results from the lifting movement.

6. Conveying apparatus according to Claim 4 or 5, **characterized in that** the damping elements (62), which are arranged in relation to the transverse conveying section (29, 32), compensate for forces acting transversely to the conveying direction.

7. Conveying apparatus according to one of Claims 4 to 6, **characterized in that** the damping elements (62) can be arranged between the conveying paths (47, 48) and a lifting unit (54).

8. Conveying apparatus according to one of the preceding claims, **characterized in that** the transverse conveying sections (29, 32) have an end region (53), which contains the passive conveying-path portion (43), and an opposite end region (52), of which the ends of the conveying paths (36, 37, 47, 48) are designed to be of equal length.

9. Conveying apparatus according to one of Claims 1 to 6, **characterized in that** the main and secondary conveying sections (20 to 23, 26, 27) have an end region (52'), which contains the passive conveying-path portion (43), and an opposite end region (53'), of which the inner conveying section (42) is shortened at least by the extent of the outer conveying path (36) of the transverse conveying section (29, 32), said conveying path running transversely into the transfer location (39, 51).

## Revendications

1. Convoyeur pour transporter des piètes, en particulier des supports de pièces (35), avec une voie de convoyage principale (20, 21, 22, 23) et avec une voie de convoyage secondaire (26, 27) placée parallèlement par rapport à elle ainsi qu'avec au moins une voie de convoyage transversale (29, 32) placée entre les chemins de convoyage (20 à 23, 26, 27) qui forment un point de remise (38, 39, 44, 51) dans une zone de croisement, la remise des supports de pièces (35) depuis les voies de convoyage transversales (29, 32) placées en travers de la voie de convoyage principale (20 à 23) et de la voie de convoyage secondaire (26, 27) étant réalisée par des zones terminales (52, 53), qu'on peut déplacer vers le haut et vers le bas, des voies de convoyage transversales (29, 32),
**caractérisé en ce que**
les voies de convoyage (20 à 23, 26, 27, 29, 32) sont formées en tant que transporteurs à double courroie avec un chemin de convoyage intérieur (37, 42, 47, 57) et un chemin de convoyage extérieur (36, 42, 48, 58), le chemin de convoyage intérieur (37, 47) du transporteur transversal (29, 32) est raccourci de la largeur du point de remise (38, 39, 44, 51) sur lequel se raccorde avec un écart dans la zone terminale (53) un segment de chemin de convoyage (43) passif qu'on peut disposer dans le point de remise (38, 39, 44, 51), et la voie de convoyage transversale (29, 32) est formée de façon fixe sur toute la longueur de transport et les zones terminales (52, 53) de la voie de convoyage transversale (29, 32) sont logées de façon à pouvoir être levées et abaissées dans les points de remise (38, 39, 44, 51).

2. Convoyeur selon la revendication 1,
**caractérisé en ce que**
les zones terminales (52, 53) de la voie de convoyage transversale (29, 32) peuvent être levées et abaissées indépendamment l'une de l'autre.

3. Convoyeur selon la revendication 1 ou 2,
**caractérisé en ce que**
les voies de convoyage transversales (29, 32) présentent à chaque fois au moins une unité de levage (54) placée aux zones terminales (52, 53).

4. Convoyeur selon l'une des revendications précédentes,
**caractérisé en ce que**
les zones terminales (52, 53) des voies de convoyage transversales (29, 32) sont logées sur l'unité de levage (54) avec des éléments d'amortissement (62).

5. Convoyeur selon la revendication 4,
**caractérisé en ce que**
les éléments d'amortissement (62) peuvent être allongés en fonction du mouvement de basculement des voies de convoyage transversales (29, 32), lequel résulte du mouvement de levage.

6. Convoyeur selon la revendication 4 ou 5,
**caractérisé en ce que**
les éléments d'amortissement (62) placés vers les voies de convoyage transversales (29, 32) compensent des forces qui s'exercent de travers par rapport à la direction de transport.

7. Convoyeur selon l'une des revendications 4 à 6,
**caractérisé en ce que**
les éléments d'amortissement (62) peuvent être disposés entre les chemin de convoyage (47, 48) et une unité de levage (54).

8. Convoyeur selon l'une des revendications précédentes,
**caractérisé en ce que**
les voies de convoyage transversales (29, 32) présentent une zone terminale (53) contenant le segment de chemin de convoyage (43) passif et une zone terminale (52) opposée dont les extrémités ont la même longueur que les chemins de convoyage (36, 37, 47, 48).

9. Convoyeur selon l'une des revendications 1 à 6,
**caractérisé en ce que**
les voies de convoyage principales et secondaires (20 à 23, 26, 27) présentent une zone terminale (52') contenant le segment de chemin de convoyage (43) passif et une zone terminale (53') opposée, dont la voie de convoyage intérieure (42) est raccourcie d'au moins la valeur du chemin de convoyage (36) extérieur de la voie de convoyage transversale (29, 32), lequel chemin pénètre transversalement dans le point de remise (39, 51).
